(19) Europäisches Patentamt

European Patent Office

Office européen des brevets

(11) **EP 1 011 214 A2**

(12) **EUROPÄISCHE PATENTANMELDUNG**

(43) Veröffentlichungstag:
21.06.2000 Patentblatt 2000/25

(51) Int. Cl.[7]: **H04B 10/10**

(21) Anmeldenummer: **99113769.6**

(22) Anmeldetag: **14.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **16.12.1998 DE 19857974**

(71) Anmelder: **ROBERT BOSCH GMBH**
**70442 Stuttgart (DE)**

(72) Erfinder:
- **Kuke, Albrecht, Dr.rer.nat.**
  **71549 Auenwald (DE)**
- **Moess, Eberhard, Dipl.-Ing.**
  **71540 Murrhardt (DE)**
- **Schwaderer, Bernhard, Dr.-Ing.**
  **71554 Weissach (DE)**
- **Hirche, Klaus, Dipl.-Ing.**
  **71332 Waiblingen (DE)**
- **Scholz, Werner, Dipl.-Ing.(FH)**
  **71554 Weissach (DE)**
- **Warth, Martin, Dipl.Mineraloge**
  **71409 Schwaikheim (DE)**

(54) **Einrichtung zur Positionsbestimmung eines optischen Strahlenbündels**

(57) Einrichtung zum Gewinnen eines elektrischen Steuersignals, das davon abhängig ist, welche Position ein einfallendes Lichtstrahlenbündel in Bezug auf eine quer zur Strahlrichtung verlaufende Trennlinie einnimmt, wobei zur Detektion der Position des Lichtstrahlenbündels zwei Fotoempfänger (14, 24) vorgesehen sind, von denen einer das auf einer Seite der Trennlinie einfallende Licht und der andere das auf der anderen Seite der Trennlinie einfallende Licht des Stahlenbündels empfängt.

Als Trennlinie ist die Kante (30) zwischen zwei kristallographischen (111)-Ebenen eines einkristallinen Substrates (1) vorgesehen, wobei jeweils eine (111)-Ebene zur Reflexion eines Teils des Lichtstrahlenbündels zwecks Weiterleitung auf einen der Fotoempfänger (14, 24) dient.

Fig. 2

## Beschreibung

Stand der Technik

Die Erfindung geht von der Gattung aus, wie im unabhängigen Anspruch 1 angegeben.

Eine Einrichtung zur Positionsbestimmung eines optischen Strahlenbündels in einer Empfangseinheit ist erforderlich, wenn Nachrichten auf dem Wege einer optischen Freistrahlübertragung zwischen einer Sendeeinheit und einer Empfangseinheit übertragen werden sollen. Wenn die Sendeeinheit und/oder die Empfangseinheit beweglich ist, so muss während der Übertragung fortlaufend die Strahlausrichtung überwacht und korrigiert werden. Insbesondere bei der Übertragung über große Strecken, wie zum Beispiel zwischen Satelliten, muss die Ausrichtung mit einer sehr geringen Winkeltoleranz durchgeführt werden.

Üblicherweise werden zur Überbrückung sehr großer Entfernungen Teleskope mit einem Linsen- oder Spiegelobjektiv verwendet. Um ein kollimiertes Strahlenbündel zu senden oder zu empfangen, muss der Sende- beziehungsweise Empfangsbaustein im Brennpunkt des Objektivs angebracht sein. Bei einer Winkeldejustierung des Empfangsteleskops wandert der Bildpunkt des Empfangsstrahlenbündels in der Brennebene des Objektivs. Der laterale Abstand des Bildpunktes von der optischen Achse des Teleskops ergibt sich dabei aus dem Produkt aus der Brennweite des Objektivs und dem Fehlwinkel zwischen der Teleskopachse und der Strahlrichtung. Aus der Position des Bildpunktes läßt sich daher die Ausrichtung des Teleskops ermitteln und ein Steuersignal zur Korrektur der Strahlausrichtung am Empfangs- und/oder Sendeort ableiten.

Nach dem Stand der Technik gibt es verschiedene Möglichkeiten, um die Position eines Lichtflecks zu bestimmen. Beispielsweise kann der Lichtfleck auf eine Vierquadrantendiode geworfen werden, die durch Vergleich der Signale aus den vier Quadranten die Strahlposition detektiert. In der europäischen Patentanmeldung EP-A-0831. 604 wird die Strahlausrichtung für kohärenten Überlagerungsempfang beschrieben. Dabei wird dem Empfangssignal Licht aus einem Lokaloszillator überlagert und die überlagerten Signale über einen Strahlteiler auf zwei Lichtpfade mit gleicher optischer Weglänge aufgeteilt. Die beiden Teilstrahlenbündel auf den beiden Lichtpfaden werden über getrennte Optiken aus Spiegeln und Linsen auf zwei Detektoren gelenkt, die jeweils aus zwei getrennten Detektorhälften bestehen.

Bei idealer Strahlausrichtung treffen die beiden Teilstrahlenbündel genau auf die beiden jeweiligen Trennlinien zwischen den beiden jeweiligen Detektorhälften auf. Durch Vergleich der Signalstärken zwischen den jeweiligen beiden Detektorhälften gewinnt man ein Signal für die Abweichung der Teilstrahlenbündel von ihren Sollpositionen. Dieses Signal kann zur Regelung verwendet werden. Die Trennlinien zwischen den jeweiligen Detektorhälften sind um 90° zueinander versetzt, so dass ein Regelsignal von einem Paar von Detektorhälften für die Korrektur der X-Ablenkung und ein zweites Regelsignal von dem anderen Paar von Detektorhälften für die Korrektur der Y-Ablenkung verwendet werden kann.

Wegen der Größe der optischen Strahlführungselemente für die beiden Teilstrahlenbündel müssen die beiden Detektoranordnungen mit den beiden getrennten Detektorhälften einen Abstand von mehreren Millimetern voneinander haben. Um die erforderliche hohe Genauigkeit der Richtungsdetektion zu erhalten, müssen die Positionen der beiden Trennlinien zwischen den beiden Detektorhälften der beiden Detektoranordnungen zueinander und zu den Strahlführungselementen für die beiden Teilstrahlenbündel eine Positionsgenauigkeit im Bereich um 1 Mikrometer haben. Diese Genauigkeit muss wegen der Größe der Strahlführungselemente auf eine Distanz von mehreren Millimetern bis zu einigen Zentimetern mit hoher Zuverlässigkeit erreicht werden.

In der vorbekannten Lösung sind die beiden Detektoranordnungen auf einem gemeinsamen Träger angeordnet. Da zur Aufgabe der Detektoren neben der Erzeugung des Regelsignals für die Strahlrichtungskorrektur auch der Empfang der übertragenen Datensignale gehört, sind wegen der hohen Bitrate der Datensignale im Bereich von bis zu 10 Gbit/s nur kleinflächige Fotodioden geeignet. Dadurch werden die Anforderungen an die Positioniergenauigkeit der Detektorenanordnungen weiter verschärft.

Vorteile der Erfindung

Der Anmeldungsgegenstand mit den Merkmalen des Anspruches 1 hat folgenden Vorteil:
Die Erfindung zeigt eine Lösung auf, mit der die oben genannten Anforderungen an die Positioniergenauigkeit in einfacher und zuverlässiger Weise erfüllt werden können. Ähnlich wie bei der vorbekannten Lösung wird das Empfangsstrahlenbündel zur Gewinnung des Positionsregelsignals in zwei Strahlenbündel für die Regelung in zwei aufeinander senkrecht stehenden Achsen aufgeteilt. Dann wird aber nicht die lichtempfindliche Fläche des Detektors wie in der vorbekannten Lösung in zwei Hälften geteilt, sondern jedes der Strahlenbündel für die Erzeugung der Positionssignale wird, bevor es auf einen Detektor trifft, jeweils an einer Kante zwischen jeweils zwei hochgenau ausgerichteten Kristallebenen in zwei Teilstrahlenbündel aufgeteilt.

Vorteilhafte Weiterbildungen sind in den abhängigen Ansprüchen angegeben, deren Merkmale auch, soweit sinnvoll, miteinander kombiniert werden können.

Gegenüber dem Stand der Technik hat eine Weiterbildung der Erfindung den Vorteil, dass die Lagetoleranzen der Strahlteilungskanten zueinander und zu Justagevertiefungen für ein Strahlformungsmodul mit sehr hoher Präzision eingehalten werden können, da die Strahlteilungskanten und Justagevertiefungen in einem gemeinsamen Maskenprozeß hergestellt werden können.

Zeichnung

Ein Ausführungsbeispiel der Erfindung ist in der Zeichnung dargestellt und im Folgenden näher erläutert.

Schematisch ist gezeigt in

Figur 1: eine Einrichtung nach der Erfindung in Aufsicht,

Figur 2: dieselbe Einrichtung im Querschnitt,

Figur 3: zwei erfindungsgemäße Einrichtungen auf einem gemeinsamen Diodenträgersubstrat,

Figur 4: eine Justagemaske aus Silizium,

Figur 5: ein Strahlformungsmodul mit Justagemaske,

Figur 6: ein Querschnitt des Details B aus Figur 3,

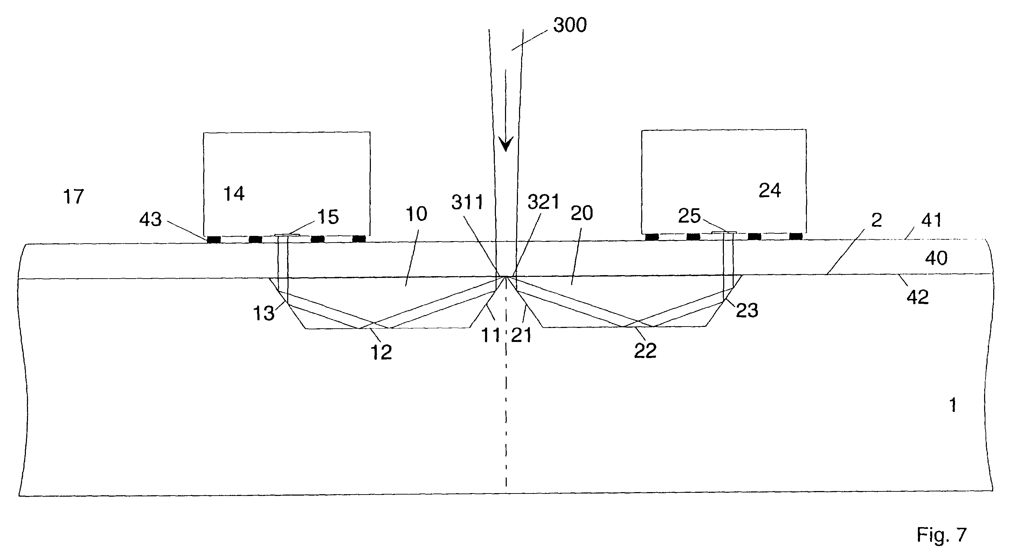

Figur 7: eine Abwandlung zu Figur 2.

Im wesentlichen gleiche Teile in unterschiedlichen Figuren sind mit gleichen Bezugszeichen versehen.

Beschreibung des Ausführungsbeispiels

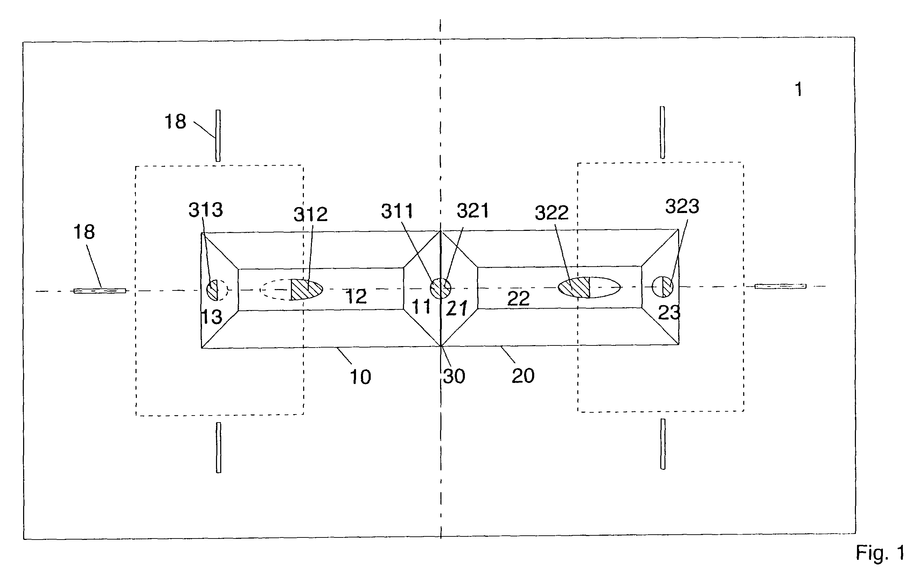

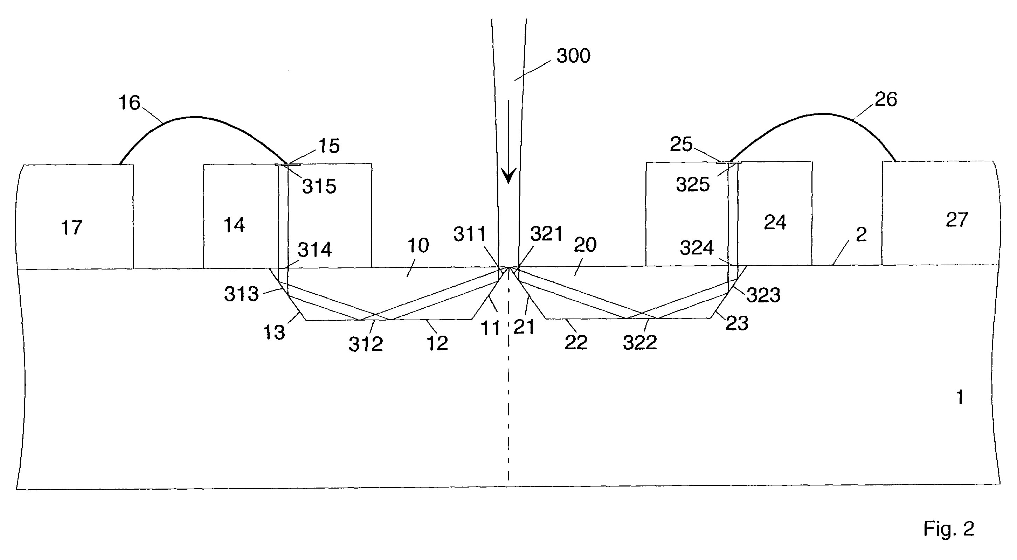

Ein Ausführungsbeispiel der erfindungsgemäßen Lösung ist in Fig. 1 in Aufsicht und in Fig. 2 im Querschnitt für eines von zwei Strahlenbündel zur Positionsdetektion dargestellt.

Basis ist ein Kristall des regulären Systems, insbesondere ein einkristallines Siliziumsubstrat 1. Auf der Waferoberseite 2 dieses Siliziumsubstrates 1, deren kristallografische Orientierung dem Millerschen Index (100) entspricht, sind durch anisotropes Ätzen zwei wannenförmige Vertiefungen 10 und 20 hergestellt, deren (111)-orientierte Seitenflächen zur Oberfläche jeweils einen durch die Kristallgeometrie bestimmten Böschungswinkel von 54,7° haben. Nach einer vorbestimmten Zeit wurde die anisotrope Ätzung gestoppt, so dass die Vertiefungen einen flachen Boden 12, 22 in einer vorbestimmten Tiefe erhalten haben. Die Seitenflächen und die Bodenflächen der Vertiefungen sind mit einer reflektierenden Schicht belegt. Der Einfachheit halber kann auch die ganze Oberfläche des mikromechanisch strukturierten Substrates verspiegelt werden. Als Spiegelschicht kann beispielsweise eine dünne Goldschicht verwendet werden.

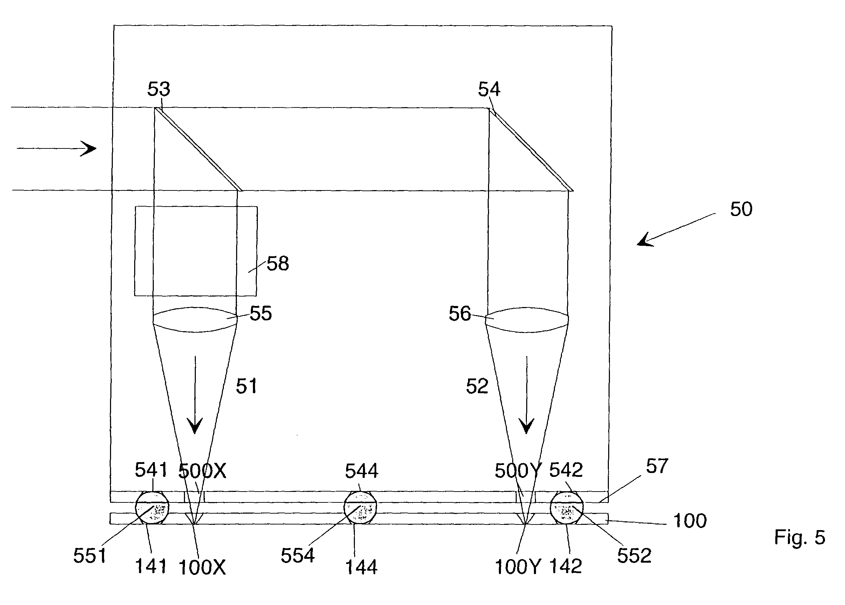

Ein Strahlenbündel 300 dessen Winkelpositionierung ermittelt werden soll, wird durch eine Empfangsoptik einer Empfangseinheit (vergleiche das Strahlformungsmodul 50 in Figur 5) so geformt und ausgerichtet, dass ein konvergentes Strahlenbündel erzeugt wird, das bei optimaler Winkeljustage mit seiner Strahlmitte auf die Kante 30 zwischen den Vertiefungen 10 und 20 fällt und die Kante 30 innerhalb der Rayleighlänge des Strahlenbündels 300 liegt. (Die Rayleighlänge $z_r = \pi \cdot w_0^{\,2} / \lambda$ kennzeichnet bei einem Gaußschen Strahlenbündel die axiale Ausdehnung des Nahfeldbereiches, wobei $w_0$ der Radius der Strahltaille und $\lambda$ die Wellenlänge ist.) Der Radius der Strahltaille $w_0$ ist typischerweise ca. 25 µm groß. Bei einer Wellenlänge von 1,064 µm (YAG-Laserlicht) ergibt sich eine Rayleighlänge $z_r$ von 1845 µm.

Die Kante 30 ist so scharf wie möglich ausgeführt, um Leistungsverluste und Rückreflexionen zu vermeiden. In der Praxis läßt sich eine verbleibende Stegbreite zwischen den Vertiefungen 10 und 20 auf der Kante 30 von < 3 µm erreichen. Das Strahlenbündel 300 wird durch die Kante 30 in zwei Teilstrahlenbündel 311 - 315 und 321 - 325 aufgeteilt, die in die einander benachbarten Vertiefungen 10 und 20 eintauchen. Dort treffen sie auf die der Kante 30 benachbarten Seitenflächen 11 und 21 an den Orten 311 und 321 auf und werden schräg nach unten zu den Orten 312 und 322 auf den Bodenflächen 12 und 22 der Vertiefungen reflektiert. Von dort werden die Strahlenbündel schräg nach oben bis auf die rückwärtigen Stirnflächen 13 bzw. 23 in den Orten 313 und 323 reflektiert. Hier wird der Lichtweg wieder nach oben umgelenkt. Über den Reflexionsfläch 13 bzw. 23 ist als Fotoempfänger je eine Fotodiode 14 bzw. 24 (in Fig. 1 ist die Position der Fotodiode mit unterbrochenen Linien dargestellt) planar auf der Waferoberseite 2 montiert.

Diese Fotodioden können beispielsweise, wie in Fig. 2 dargestellt, rückseitenbestrahlte Fotodioden sein, die in diesem Fall ihre lichtempfindliche Fläche 15 bzw. 25 auf der Oberseite haben. In diese lichtempfindlichen Flächen treffen die Strahlenbündel mit ihren halbkreisförmigen Querschnitten 315 bzw. 325.

Die lichtempfindlichen Flächen werden durch Bonddrähte 16 bzw. 26 von oben kontaktiert. Die Bonddrähte können entweder auf Bondstützpunkte oder auf HF-Streifenleitungen 17 bzw. 27 geführt sein. Der jeweils andere Pol der Fotodioden kann entweder ebenfalls über Bonddrähte auf der Oberseite oder über eine leitfähige Montagefläche auf der Unterseite des Fotodioden-Chips kontaktiert sein (in Fig. 2 nicht gezeichnet).

Ebenso kann auch eine vorderseitenbestrahlte Fotodiode eingesetzt werden. Diese wird mit der lichtempfindlichen Seite nach unten auf der Waferoberseite 2 montiert, wobei die Ausrichtung durch mikromechanisch strukturierte Justagemarken 18 erleichtert werden kann. Zur mechanischen und elektrischen Kontaktierung kann hier die Flip-Chip-Technik eingesetzt werden.

In einer weiteren Variante für die Montage und Kontaktierung der Fotodioden können diese auch auf einem zusätzlichen transparenten Substrat 40 (Fig.

7) montiert und kontaktiert sein, das über dem Siliziumsubstrat 1 angebracht ist, wobei auf der Oberseite 41 des transparenten Substrates 40 Hochfrequenz-Leitungen und Kontaktierungsflächen für Bumps 43 und auf dessen Unterseite 42 Massebelegungen nach in der Technik bekannten Verfahren strukturiert sein können.

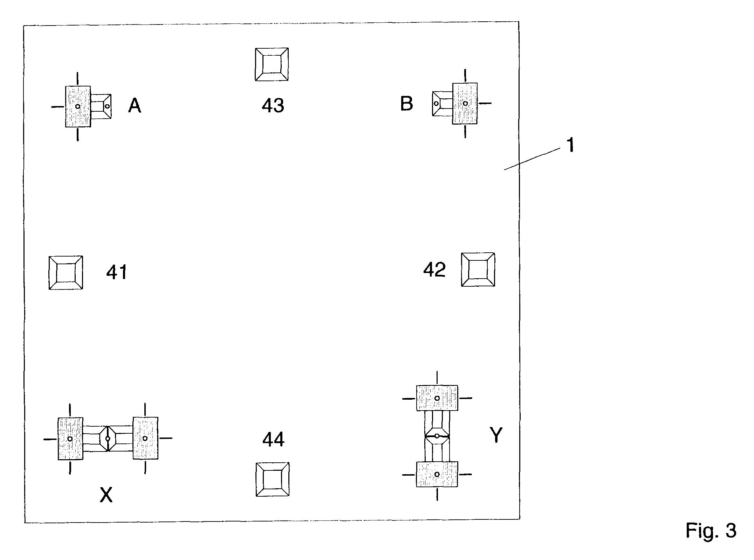

In Fig. 3 sind auf einem gemeinsamen Diodenträgersubstrat 1 zwei erfindungsgemäße Einrichtungen, also zwei Empfangsstrukturen in den Positionen X und Y jeweils gemäß den Figuren 1 und 2 dargestellt, wobei die Kanten zwischen den jeweiligen wannenförmigen Vertiefungen senkrecht zueinander ausgerichtet sind, um Winkelkorrekturen in X- und Y-Richtung durchführen zu können.

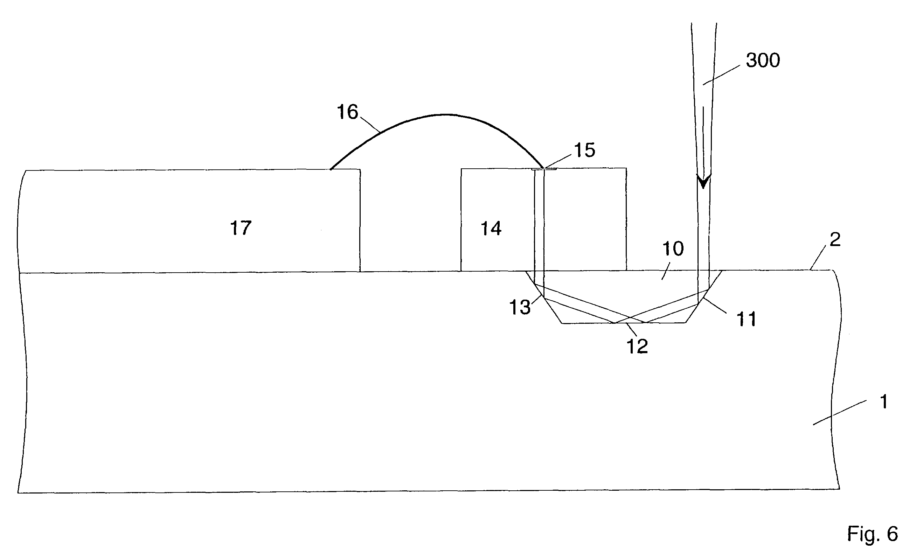

Zusätzlich können noch an weiteren Empfangspositionen A und B zwei weitere abgezweigte Teilstrahlenbündel aus dem Gesamtempfangslichtbündel vorgesehen werden. Diese sind beispielsweise bei einem kohärenten phasenmodulierten Überlagerungsempfang zur Signaldetektion erforderlich. In den weiteren Empfangspositionen A und B muss das jeweilige Teilstrahlenbündel nicht zur Richtungsdetektion aufgeteilt werden. Auch bei einem Empfang ohne Strahlaufteilung kann eine wannenförmoge Vertiefung verwendet werden. Dabei wird, wie in Fig. 6 dargestellt, das Strahlenbündel auf die Mitte einer ersten Stirnfläche 11 der geätzten wannenförmigen Vertiefung 10 gerichtet. Nach Reflexion an dieser Stirnfläche, dem Wannenboden 12 und einer zweiten, der ersten gegenüberliegenden Stirnfläche 13 wird das Strahlenbündel von unten in eine darüber montierte Fotodiode 14 gerichtet.

Das gesamte Substrat 1 mit den Empfangspositionen X, Y, A und B (Figur 3) muss gegenüber einem optischen Strahlformungsmodul, in dem das Empfangsstrahlenbündel geteilt und fokussiert wird, mit sehr hoher Präzision ausgerichtet und montiert werden, damit die vier Teilstrahlenbündel genau in die vorgesehene Empfangspositionen treffen und dort sicher gehalten werden. Eine Weiterbildung der vorliegenden Erfindung bietet auch für dieses Problem eine Lösung. Hierfür werden an mindestens zwei Stellen pyramidenförmige oder pyramidenstumpfförmige Vertiefungen anisotrop geätzt. In der Fig. 3 sind vier dieser Vertiefungen 41, 42, 43 und 44 eingezeichnet. Da diese Justagevertiefungen im selben anisotropen Ätzprozeß und mit der selben Maske wie die wannenförmigen Vertiefungen erzeugt werden, befindet sich die Lagetoleranz zu diesen wannenförmigrn Vertiefungen und der wannenförmigrn Vertiefungen zueinander im Bereich < 1 μm.

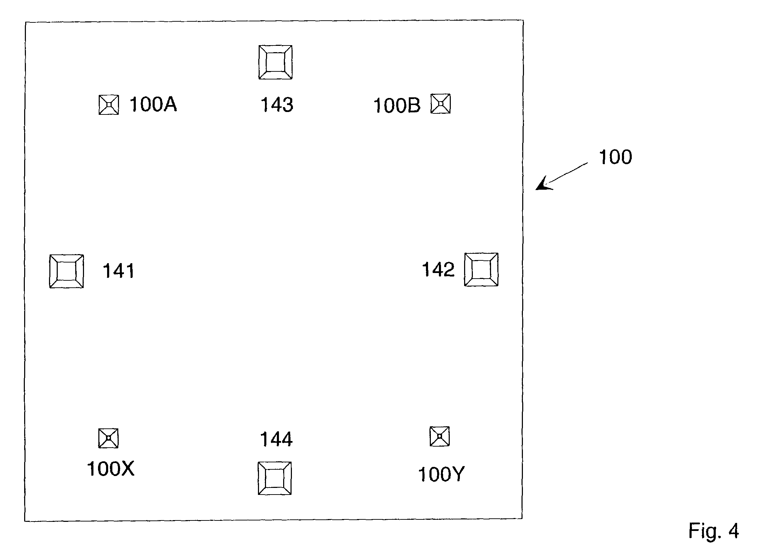

Zur Justage der Teilstrahlenbündel im Strahlformungsmodul 50 (Fig. 5) kann ebenfalls durch mikromechanische Strukturierung eine Justagemaske 100 aus Silizium hergestellt werden (Fig. 4), die an den gleichen Stellen Justagevertiefungen 141 bis 144 besitzt wie das Diodenträgersubstrat 1 und die an den Auftreffpositionen X, Y, A und B der Einzelstrahlenbündel Durchätzungen 100X, 100Y, 100A und 100B aufweist. Mit Hilfe dieser Justagemaske lassen sich die Einzelstrahlenbündel 51, 52 (Fig. 5) im Strahlformungsmodul 50 über die Spiegel 53, 54 und die Linsen 55, 56 justieren, indem das Strahlformungsmodul 50 mit komplementären Strukturen 541 bis 544 in seiner Unterseite 57 und Justagekugeln 551 bis 554 in die Justagevertiefungen der Justagemaske gesetzt wird.

Die Anpassung der Lichtweglängen der Einzelstrahlenbündel zueinander geschieht durch einen oder mehrere Verzögerungsmodule 58. Der Strahlformungsmodul 50 kann dann ohne weitere Justage auf das Diodenträgersubstrat 1 in den entsprechenden Justagevertiefungen aufgesetzt und fixiert werden.

In der Lösung nach dem Stand der Technik (EP 0 831 604 A1) sind die Empfangsdioden selbst in zwei Hälften geteilt. Die Position der Trennungslinie zwischen den Fotodiodenhälften ist dadurch fest mit der Diodenposition selbst gekoppelt. Gerade durch die Positionen dieser Trennungslinien der beiden Richtungsdetektoreinheiten zueinander und zu den Strahlpositionen, die durch die Lage des Strahlformungsmoduls bestimmt sind, wird die Präzision der Winkelkorrektur festgelegt. In der vorbekannten Lösung müssen daher die Empfangsdioden selbst mit höchster Präzision positioniert werden. Dies ist nur mit sehr hohem Justageaufwand und deshalb mit hohen Kosten möglich. In der hier vorgeschlagenen erfindungsgemäßen Lösung werden die hohen Genauigkeitsanforderungen dagegen durch die mikromechanische Strukturierung auf kostengünstige Weise erfüllt. Die Positionierung der Fotodioden auf der Substratoberseite ist hier unkritisch und muss nur so genau sein, dass entsprechend dem Verhältnis von Strahldurchmesser und Durchmesser der aktiven Fotodiodenfläche ein guter Koppelwirkungsgrad erreicht wird. Typischerweise reichen hier Toleranzen < 10 μm aus, die mit normalen Absetzwerkzeugen erreicht werden können. Die Positionierung der Fotodioden kann durch mikromechanisch erzeugte Justagemarken 18 auf der Waferoberseite oder durch bekannte Filp-Chip-Technik erleichtert werden.

Eventuell störende Rückreflexionen von der Kante 30 oder von den Fotodiodenober- und -unterseiten können auf bekannte Weise durch Schrägstellen des Strahlenbündels vermieden werden. Die dadurch veränderten Strahlführungen und Lichtweglängen lassen sich durch geeignete Modifikation der Geometrie der wannenförmigen Vertiefungen und der Lage der Justagemarken 18 kompensieren. Die Schrägstellung der Einzelstrahlenbündel läßt sich durch einen geringfügigen lateralen Versatz der Justagestrukturen 541 bis 544 gegenüber den Spiegeln 53, 54 und Linsen 55, 56 auf einfache Weise erreichen, ohne dass eine Verkippung des Strahlformungsmoduls 50 gegenüber dem Diodenträgersubstrat 1 erforderlich wird. Durch eine solcherweise erzeugte Strahlschrägstellung ergeben sich keine zusätzlichen optischen Wegunterschiede im Strahlformungsmodul.

**Patentansprüche**

1. Einrichtung zum Gewinnen eines elektrischen Steuersignals, das davon abhängig ist, welche Position ein einfallendes optisches Strahlenbündel in Bezug auf eine quer zur Strahlrichtung verlaufende Trennlinie einnimmt, wobei zur Detektion der Position des Lichtstrahlenbündels zwei Fotoempfänger (14, 24) vorgesehen sind, von denen einer die auf einer Seite der Trennlinie einfallende Strahlung und der andere die auf der anderen Seite der Trennlinie einfallende Strahlung des Stahlenbündels empfängt,
dadurch gekennzeichnet, dass
als Trennlinie die Kante (30) zwischen zwei kristallographischen (111)-Ebenen eines einkristallinen Substrates (1) vorgesehen ist, wobei jeweils eine (111)-Ebene zur Reflexion eines Teils des Strahlenbündels zwecks Weiterleitung auf einen der Fotoempfänger (14, 24) dient.

2. Einrichtung nach Anspruch 1, dadurch gekennzeichnet, dass die (111)-Ebenen jeweils eine Vertiefung (10, 20) begrenzen, wobei die beiden Vertiefungen (10, 20) in dieselbe Flachseite das Substrats (1) geätzt sind, die eine (100)-Ebene bildet.

3. Einrichtung nach Anspruch 2, dadurch gekennzeichnet, dass die Flachseite (2) die Fotoempfänger (14, 24) trägt und dass die Vertiefungen (10, 20) durch weitere geätzte Ebenen begrenzt sind, die als Reflexionsebenen für den Teil des Strahlenbündels dienen.

4. Einrichtung nach einem der vorangehenden Ansprüche, dadurch gekennzeichnet, dass zwei Kanten vorgesehen sind, die voneinander beabstandet zueinander senkrecht verlaufen und zur Strahlaufteilung jeweils eines Strahlenbündels dienen.

5. Einrichtung nach einem der vorangehenden Ansprüche, dadurch gekennzeichnet, dass das Substrat (1) auf einer Flachseite (2) anisotrop geätzte, pyramidenförmige oder pyramidenstumpfförmige Vertiefungen (41 bis 44) aufweist, die zur Selbstjustage für ein Strahlformungsmodul (50) dienen.

6. Einrichtung nach einem der vorangehenden Ansprüche, dadurch gekennzeichnet, dass das Substrat (1) auf einer Flachseite (2) eine anisotrop geätzte, wannenförmige Vertiefung mit einer kristallografischen (111)-Ebene aufweist, auf die ein Strahlenbündel (300, Figur 6) so gerichtet ist, dass es von der (111)-Ebene vollständig auf den Boden (12) der Vertiefung reflektiert und von dort letztlich auf einen Fotoempfänger (14) reflektiert wird, der auf derselben Flachseite (2) angeordnet ist.

Fig. 1

Fig. 2

Fig. 3

Fig. 4

Fig. 5

Fig. 6

Fig. 7